# EUROPÄISCHE PATENTSCHRIFT

(11) **EP 2 962 906 B1**
(45) Veröffentlichungstag und Bekanntmachung des Hinweises auf die Patenterteilung: **21.09.2016**
(21) Anmeldenummer: 14002281.5
(22) Anmeldetag: 03.07.2014
(51) Int. Cl.: B60R 22/46, B60R 22/195, F16B 41/00

(54) **Andruckeinheit sowie Endbeschlag mit einer solchen Andruckeinheit**
Pressure unit and end fitting with such a pressure unit
Presseur et butée de fin de course dotée d'un tel presseur

(43) Veröffentlichungstag der Anmeldung: 06.01.2016
(73) Patentinhaber: TRW Automotive GmbH, 73553 Alfdorf (DE); TRW Polska Sp.z.o.o., 42-200 Czestochowa (PL)
(72) Erfinder: Seitzer, Dominik, 73550 Waldstetten (DE); Górecki, Pawel, PL 42-300 Mysków (PL); Kacprzak, Michal, DE - 73527 Schwäbisch Gmünd (DE)
(74) Vertreter: Prehn, Manfred

(56) Entgegenhaltungen:
- DE-A1-102011 117 052
- US-A- 3 388 227
- US-A- 6 142 525

## Beschreibung

Die Erfindung betrifft eine Andruckeinheit zur Beaufschlagung einer Gurtwelle in einem Sicherheitsgurtsystem, mit einer Schraube zur Befestigung der Andruckeinheit an einem Rahmen des Sicherheitsgurtsystems, wobei die Schraube einen Schraubenkopf und einen Schraubenschaft aufweist, und wobei die Andruckeinheit einen Befestigungsabschnitt mit einer Schraubenöffnung zum Durchstecken des Schraubenschafts umfasst Ferner betrifft die Erfindung einen Endbeschlag mit einer solchen Andruckeinheit, wobei vorzugsweise ein Strafferantrieb vorgesehen ist, der die Gurtwelle in einer Aufwickelrichtung antreiben kann.

Gurtstraffer für Sicherheitsgurtsysteme sind bereits allgemein aus der Kraftfahrzeugtechnik bekannt. Bei sogenannten Endbeschlagstraffern wird Im Falle einer Aktivierung des Gurtstraffers das eigentlich feste, üblicherweise mit dem Sitzrahmen oder der Fahrzeugkarosserie verbundene Ende eines Gurtbands angezogen, um für eine Straffung des gesamten Gurtbands zu sorgen. Im Stand der Technik sind sowohl linear arbeitende als auch rotatorische Endbeschlagstraffer beschrieben. Bei den rotatorischen Endbeschlagstraffern ist das Gurtbandende mit einer Gurtwelle verbunden, welche bei einer Aktivierung des Gurtstraffers angetrieben wird, um Gurtband auf die Gurtwelle aufzuwickeln.

Für die Montage des Sicherheitsgurtsystems wird insbesondere in Bezug auf Endbeschlagstraffer zunehmend ein Ablauf gewünscht, bei dem erst nach der Montage des Gurtstraffers an der Fahrzeugkarosserie oder am Sitzrahmen eine Befestigung des Gurtbandendes am Gurtstraffer erfolgt.

Um eine solche nachträgliche Befestigung des Gurtbands mit geringem Montageaufwand zu ermöglichen, schlägt die DE 10 2011 117 052 A1 einen Endbeschlagstraffer für ein Sicherheitsgurtsystem vor, mit einem Rahmen, einer Gurtwelle, die in dem Rahmen um eine Achse drehbar gelagert ist, sowie einem Gurtwellen-Einschubelement, an dem ein Ende eines Gurtbands befestigt ist, wobei die Gurtwelle eine Aussparung zur Aufnahme des Gurtwellen-Einschub-elements aufweist, und wobei das Gurtwellen-Einschubelement im Wesentlichen radial in die Aussparung einführbar ist. Außerdem ist eine gattungsgemäße Andruckeinheit vorgesehen, welche im fertig montierten Zustand des Endbeschlags die Gurtwelle In ihre Sperrstellung beaufschlagt und somit eine hohe Funktionssicherheit des Endbeschlagstraffers gewährleistet.

Aufgabe der Erfindung ist es, eine einfach herstellbare und kostengünstige Andruckeinheit zu schaffen, die sich mit geringem Montageaufwand dauerhaft und zuverlässig am Rahmen eines Endbeschlags befestigen lässt.

Diese Aufgabe wird erfindungsgemäß gelöst durch eine Andruckeinheit der eingangs genannten Art, bei welcher zwischen der Schraubenöffnung und dem Schraubenschaft ein radiales Spiel vorgesehen ist und der Befestigungsabschnitt schraubenkopfseitig Montagearme zur axialen Fixierung der Schraube in einer Vormontageposition aufweist. Dadurch ergibt sich eine vorteilhafte Baugruppe aus Andruckelement und Schraube, wobei die Schraube am Befestigungsabschnitt der Andruckeinheit vormontiert ist.

In einer Ausführungsform weist der Befestigungsabschnitt eine erste, rahmenseitige Kontaktfläche und eine axial entgegengesetzte zweite, schraubenkopfseitige Kontaktfläche auf, wobei das vom Schraubenkopf abgewandte Ende der Schraube in der Vormontageposition axial zwischen einem freien Ende der Montagearme und der ersten Kontaktfläche des Befestigungsabschnitts angeordnet ist. Demzufolge bildet die Schraube mit der Andruckeinheit eine vormontierte Baugruppe, steht jedoch nicht über die rahmenseitige Kontaktfläche des Befestigungsabschnitts vor, sodass sich die Andruckeinheit relativ zum Rahmen des Endbeschlags einfach positionieren lässt.

In einer weiteren Ausführungsform ist die Schraube eine Bundschraube und weist in axialer Richtung zwischen dem Schraubenkopf und dem Schraubenschaft einen Schraubenbund auf, wobei der Durchmesser des Schraubenbunds zwischen dem Durchmesser des Schraubenschafts und dem Durchmesser des Schraubenkopfes liegt. Der Schraubenbund bildet somit einen Anschlag beim Eindrehen der Schraube in den Rahmen des Endbeschlags und definiert folglich auf einfache Weise einen gewünschten Abstand zwischen Schraubenkopf und Rahmen.

Vorzugsweise ist in dieser Ausführungsform eine minimale Abmessung der Schraubenöffnung senkrecht zur Schaftachse der Schraube größer als der Durchmesser des Schraubenbunds und kleiner als der Durchmesser des Schraubenkopfes. Ein Rand der Schraubenöffnung bildet somit einen Anschlag für den Schraubenkopf, wohingegen der Schraubenbund in der Schraubenöffnung aufgenommen werden kann.

Ferner kann die Dicke des Befestigungsabschnitts am Rand der Schraubenöffnung geringfügig größer sein als die Länge des Schraubenbunds. Geringfügig größer bedeutet dabei insbesondere, dass die Dicke des Befestigungsabschnitts um maximal 1 mm, bevorzugt um maximal 0,5 mm größer ist als die Länge des Schraubenbunds. Sofern das Material des Befestigungsabschnitts eine gewisse Verformbarkeit aufweist, lässt sich die Andruckeinheit dadurch mit einer definierten Vorspannung am Rahmen befestigen.

Bevorzugt weist der Schraubenbund eine in Umfangsrichtung umlaufende Nut auf, wobei die Montagearme der Andruckeinheit in der Vormontageposition der Schraube in diese Nut eingreifen. Auf diese Weise lässt sich die Schraube relativ zur Andruckeinheit mit geringem Aufwand axial in der Vormontageposition fixieren.

In einer weiteren Ausführungsform der Andruckeinheit sind die Montagearme radial elastische Federarme, insbesondere zwei einander gegenüberliegende, radial elastische Federarme, welche die Schraube in der Vormontageposition radial einwärts beaufschlagen.

Bevorzugt weisen dabei die Montagearme dem Schraubenkopf zugewandte Schrägflächen auf, an denen der Schraubenkopf bei einer axialen Beaufschlagung in Richtung zur ersten, rahmenseitigen Kontaktfläche entlang gleiten kann, wobei sich die Federarme radial nach außen verformen.

In einer weiteren Ausführungsform umfasst die Andruckeinheit einen Kunststoffkörper, der einstückig mit dem Befestigungsabschnitt ausgebildet ist. Beispielsweise ist der Kunststoffkörper ein einfaches Spritzgussteil und ermöglicht damit eine besonders kostengünstige Herstellung der Andruckeinheit.

Ferner umfasst die Andruckeinheit bevorzugt wenigstens ein Federelement zur Beaufschlagung der Gurtwelle des Sicherheitsgurtsystems, wobei dieses wenigstens eine Federelement teilweise von einem Kunststoff des als Spritzgussteil ausgeführten Kunststoffkörpers umspritzt sein kann.

Im Übrigen wird die technische Aufgabe auch gelöst durch einen Endbeschlag eines Sicherheitsgurtsystems, mit einer obengenannten Andruckeinheit, einem Rahmen aus Metall, der eine Gewindeöffnung zur Befestigung der Andruckeinheit am Rahmen aufweist, und einer Gurtwelle, die in dem Rahmen um eine Achse drehbar gelagert ist, wobei sich die Schraube in einer Befestigungsposition mit radialem Spiel durch die Schraubenöffnung der Andruckeinheit erstreckt und in die Gewindeöffnung des Rahmens eingeschraubt ist.

Vorzugsweise ist die Schraube eine Bundschraube und weist in axialer Richtung zwischen dem Schraubenkopf und dem Schraubenschaft einen Schraubenbund auf, wobei der Durchmesser des Schraubenbunds zwischen dem Durchmesser des Schraubenschafts und dem Durchmesser des Schraubenkopfs liegt, wobei der Schraubenkopf bundseitig eine Anlagefläche für den Befestigungsabschnitt und der Schraubenbund schaftseitig eine Anlagefläche für den Rahmen aufweist.

Besonders bevorzugt ist die Dicke des Befestigungsabschnitts geringfügig größer als die Länge des Schraubenbunds, wobei in der Befestigungsposition der Schraube die Anlagefläche des Schraubenkopfes am Befestigungsabschnitt und die Anlagefläche des Schraubenbundes am Rahmen anliegen. Geringfügig größter bedeutet dabei insbesondere, dass die Dicke des Befestigungsabschnitts um maximal 1 mm, bevorzugt um maximal 0,5 mm größer ist als die Länge des Schraubenbunds. Durch das Eindrehen der Schraube bis zu einem Metall/Metall-Kontakt zwischen der Anlagefläche des Schraubenbunds und dem Rahmen ergibt sich dauerhaft eine definierte und zuverlässige Befestigung der Andruckeinheit am Rahmen des Endbeschlags unter Vorspannung des Befestigungsabschnitts. Die Befestigung Ist dabei insbesondere unabhängig vom Material des Befestigungsabschnitts. Dies ist speziell bei einer bevorzugten Fertigung des Befestigungsabschnitts aus Kunststoff vorteilhaft, weil sich das über die Zeit kaum abschätzbare Materialverhalten des Kunststoffs (Kriechdehnung, Alterung) somit nicht auf die Verbindung zwischen Andruckeinheit und Rahmen auswirken.

Weitere Merkmale und Vorteile der Erfindung ergeben sich aus der nachfolgenden Beschreibung einer bevorzugten Ausführungsform unter Bezugnahme auf die Zeichnungen. In diesen zeigen:
- Figur 1, einen axialen Längsschnitt durch einen Endbeschlagstraffer mit einer Andruckeinheit gemäß dem Stand der Technik;
- Figur 2 eine Draufsicht des Endbeschlagstraffers gemäß Figur 1;
- Figur 3 eine Seitenansicht des Endbeschlagstraffers gemäß Figur 1;
- Figur 4 eine weitere Seitenansicht des Endbeschlagstraffers gemäß Figur 1;
- Figur 5 eine perspektivische Ansicht des Endbeschlagstraffers gemäß den Figuren 1 bis 4 vor der Montage eines Gurtwellen-Einschubelements;
- Figur 6 eine perspektivische Ansicht des Endbeschlagstraffers gemäß den Figuren 1 bis 4 bei der Montage des Gurtwellen-Einschubelements;
- Figur 7 eine perspektivische Ansicht des Endbeschlagstraffers gemäß den Figuren 1 bis 4 nach der Montage des Gurtwellen-Einschubelements und vor der Montage einer Andruckeinheit;
- Figur 8 eine perspektivische Ansicht des Endbeschlagstraffers gemäß den Figuren 1 bis 4 im fertig montierten Zustand;
- Figur 9 eine perspektivische Ansicht einer erfindungsgemäßen Andruckeinheit für den Endbeschlagstraffer gemäß den Figuren 1 bis 8;
- Figur 10 eine weitere Ansicht der Andruckeinheit gemäß Figur 9;
- Figur 11 einen Detailschnitt durch die Andruckeinheit gemäß Figur 9 im Bereich eines Befestigungsabschnitts;
- Figur 12 einen Detailschnitt durch die Andruckeinheit gemäß Figur 9 bei der Montage einer Schraube;
- Figur 13 einen Detailschnitt durch die Andruckeinheit gemäß Figur 9 In einer Vormontageposition der Schraube;
- Figur 14 einen Detailausschnitt eines erfindungsgemäßen Endbeschlags bei der Montage der Andruckeinheit gemäß Figur 13; und
- Figur 15 einen Detailausschnitt des Endbeschlags gemäß Figur 14, mit der Andruckeinheit gemäß Figur 13 in einer Endmontageposition der Schraube.

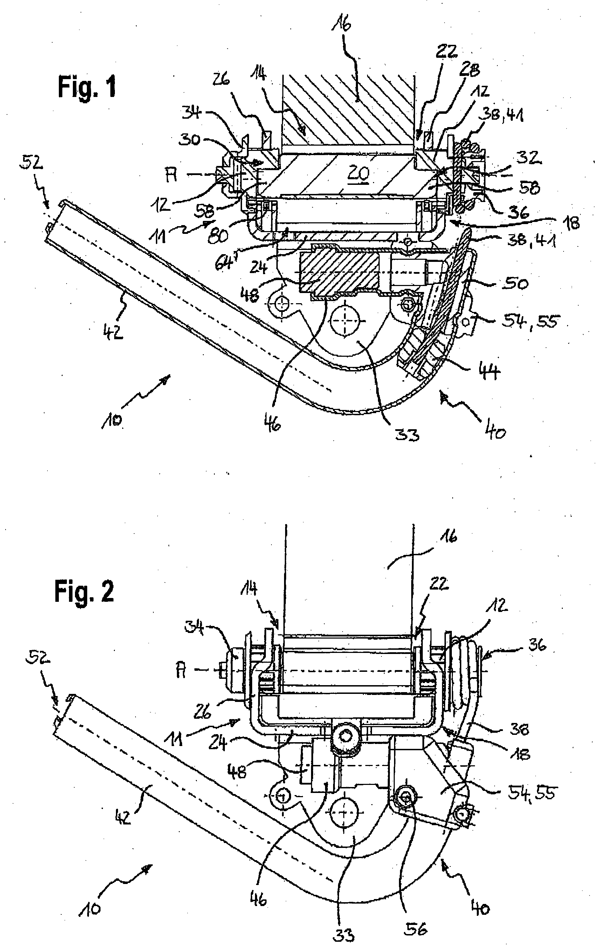

Die Figuren 1 bis 4 zeigen einen Endbeschlagstraffer 10 für ein Sicherheitsgurtsystem in einem Kraftfahrzeug, mit einem Endbeschlag 11 und einem Strafferantrieb 40. Der Endbeschlag 11 umfasst dabei eine Gurtwelle 12, an der ein Ende 14 eines Gurtbands 16 fixiert ist, und einen karosseriefest montierbaren Rahmen 18 aus Metall, in dem die Gurtwelle 12 gelagert ist, wobei die Gurtwelle 12 nach einer Aktivierung des Endbeschlagstraffers 10 relativ zum Rahmen 18 in einer Gurtband-Aufwickelrichtung gedreht werden kann, um Gurtband 16 aufzuwickeln.

Im dargestellten Ausführungsbeispiel ist das Ende 14 des Gurtbands 16 zu einer Schlaufe vernäht, die eln Gurtwellen-Einschubelement 20 umschließt, wobei das Gurtwellen-Einschubelement 20 In einer Aussparung 22 der Gurtwelle 12 aufgenommen und relativ zur Gurtwelle 12 drehfest gelagert ist.

Gemäß Figur 2 ist der Rahmen 18 des Endbeschlagstraffers 10 U-förmig ausgebildet und umfasst einen Steg 24 sowie zwei gegenüberliegende Schenkel 26, 28, wobei jeder Schenkel 26, 28 eine Öffnung 30, 32 aufweist, durch welche sich die Gurtwelle 12 erstreckt. Ferner ist eine vom Steg 24 abgebogene Befestigungslasche 33 vorgesehen, durch die der Rahmen 18 fest mit einem Fahrzeugsitz oder einer Fahrzeugkarosserie verbunden, insbesondere verschraubt werden kann.

Die Gurtwelle 12 ist im Rahmen 18 um eine Achse A drehbar gelagert. An den axialen Enden der Gurtwelle 12 ist eine Abdeckkappe 34 bzw. eine Seilspule 36 angeordnet, wobei die Abdeckkappe 34 und die Seilspule 36 fest mit der Gurtwelle 12 verbunden, insbesondere verpresst sind und eine axiale Bewegung der Gurtwelle 12 relativ zum Rahmen 18 verhindern oder auf ein geringes axiales Spiel minimieren.

Um das Gurtband 16 bei einer Aktivierung des Endbeschlagstraffers 10 anziehen zu können, ist ein Kraftübertragungselement 38 vorgesehen, welches die Gurtwelle 12 mit einem Strafferantrieb 40 koppelt. Das Kraftübertragungselement 38 ist im dargestellten Ausführungsbeispiel ein Zugseil 41, welches teilweise auf die Seilspule 36 aufgewickelt und mit einem Seilende an der Seilspule 36 befestigt ist.

Der Strafferantrieb 40 des Endbeschlagstraffers 10 umfasst ein Strafferrohr 42 zur Aufnahme und Führung eines Druckbeaufschlagungselements 44 sowie ein separates Generatorgehäuse 46 zur Aufnahme eines Gasgenerators 48. Das Generatorgehäuse 46 ist im dargestellten Ausführungsbeispiel ein Rohrstück, sodass sowohl das Strafferrohr 42 als auch das Generatorgehäuse 46 aus einem Metallrohr, insbesondere einem Stahlrohr hergestellt sind. Außerdem ist ein Kopplungselement 50 vorgesehen, welches das Generatorgehäuse 46 fest mit dem Strafferrohr 42 verbindet (vgl. Figur 1).

Das Druckbeaufschlagungselement 44 ist gemäß Figur 1 ein Kolben, der im gebogenen Strafferrohr 42 im Wesentlichen abgedichtet und längs einer Rohrachse verschieblich aufgenommen ist. Das mit einem Seilende an der Seilspule 36 befestigte Zugseil 41 erstreckt sich von der Seilspule 36 in das Strafferrohr 42 und ist dort mit einem entgegensetzten Seilende am Kolben befestigt. Nach einer Aktivierung des Gasgenerators 48 wird der Kolben mit einem Gasdruck beaufschlagt und bewegt sich in Richtung zu einem freien Rohrende 52 des Strafferrohrs 42. Dabei wird unter Drehung der Gurtwelle 12 Zugseil 41 von der Seilspule 36 abgewickelt und gleichzeitig Gurtband 16 auf die Gurtwelle 12 aufgewickelt, sodass eine Gurtstraffung stattfindet.

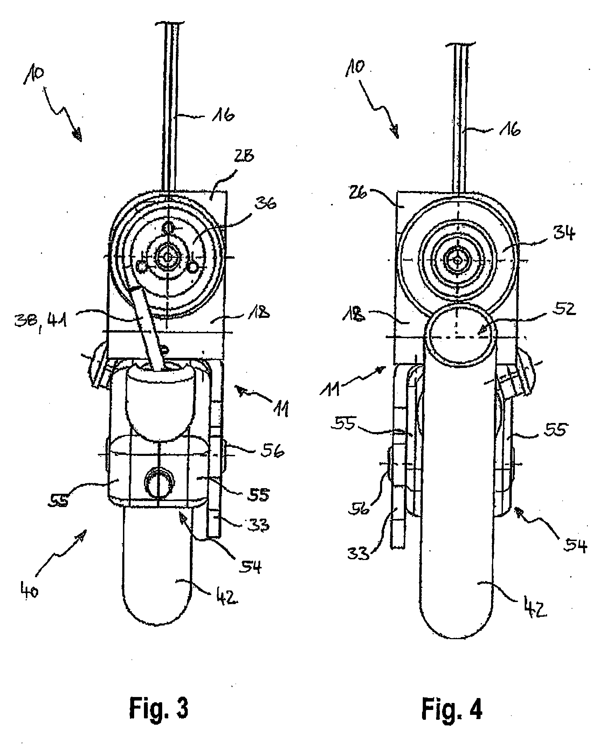

Um die Verbindung zwischen dem Strafferrohr 42 und dem Generatorgehäuse 46 zu verstärken sowie eine einfache Verbindung zwischen dem Strafferantrieb 40 und dem Rahmen 18 zu schaffen, ist im Übrigen eine Stabilisierungseinheit 54 vorgesehen. Diese Stabilisierungseinheit 54 umfasst im vorliegenden Fall zwei Stabilisierungselemente 55, insbesondere aus Zinkdruckguss, und ein z.B. als Rohrniet ausgeführtes Verbindungselement 56 (vgl. Figuren 3 und 4).

Selbstverständlich kann der Endbeschlagstraffer 10 gemäß den Figuren 1 bis 4 auch durch einen Hydraulikmotor angetrieben werden oder mit einem anderen alternativen Strafferantrieb, insbesondere einem sogenannten "Powerenake"-Antrieb, ausgestattet sein. Als "Powersnake" wird dabei ein flexibles, elastisch und/oder plastisch deformierbares Kunststoffelement bezeichnet, das weitgehend abgedichtet im Strafferrohr 42 aufgenommen und längsverschieblich geführt ist.

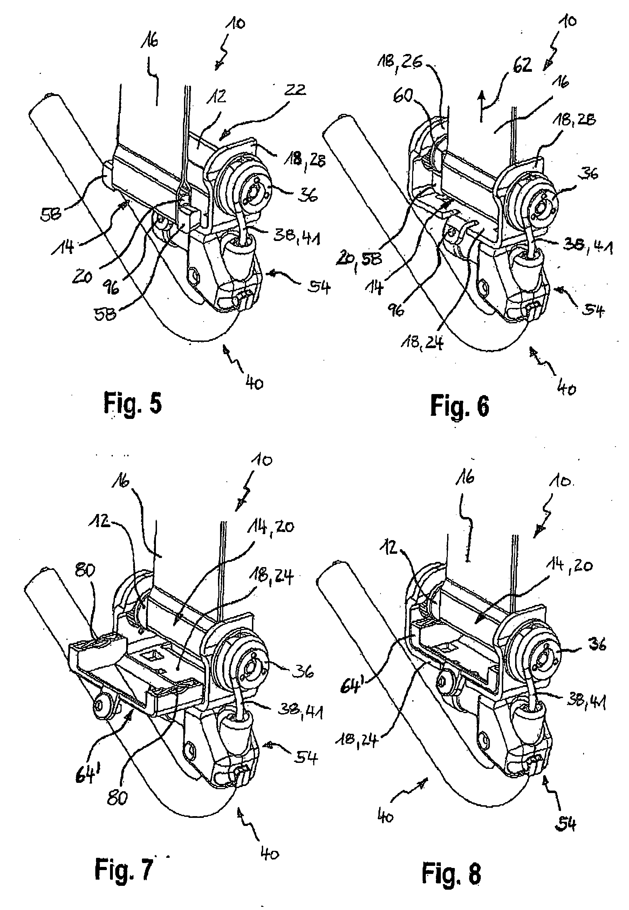

Die Figuren 6 bis 8 zeigen den Ablauf einer nachträglichen Montage des Gurtbands 16 am Endbeschlag 11 des oben beschriebenen Endbeschlagstraffers 10, welcher bereits vorab fest an einem Sitzrahmen oder einer Karosserie des Kraftfahrzeugs installiert wurde.

Gemäß Figur 5 wird das Gurtwellen-Einschubelement 20 mit daran befestigtem Gurtband 16 dem bereits installierten Teil des Endbeschlags 11 zugeführt, bis sich Lagerabschnitte 58 das Gurtwellen-Einschubelements 20 radial außerhalb der in der Gurtwelle 12 ausgebildeten Gabellager 60 befinden (vgl. Figur 6).

Wie in Figur 6 durch einen Pfeil 62 angedeutet lässt sich das Gurtwellen-Einschubelement 20 anschließend durch eine radiale Bewegung relativ zur Gurtwelle 12 in die Aussparung 22 und die Gabellager 60 einführen, sodass das Gurtwellen-Einschubelement 20 drehfest mit der Gurtwelle 12 verbunden ist (vgl. Figur 7).

Um zu verhindern, dass sich das Gurtwellen-Einschubelement 20 und das daran befestigte Gurtband 16 unbeabsichtigt von der Gurtwelle 12 lösen, wird gemäß Figur 7 eine Andruckeinheit 64' zwischen die Gurtwelle 12 und den Steg 24 des Rahmens 18 geschoben und am Rahmen 18 fixiert (vgl. Figur 8). Die Andruckeinheit 64' ist bevorzugt so ausgebildet, dass sie sich nur bei korrekter Montage des Gurtwellen-Einschubelements 20 an der Gurtwelle 12 einschieben lässt, sodass eine fehlerhafte Montage des Gurtwellen-Einschubelements 20 an der Gurtwelle 12 ausgeschlossen ist.

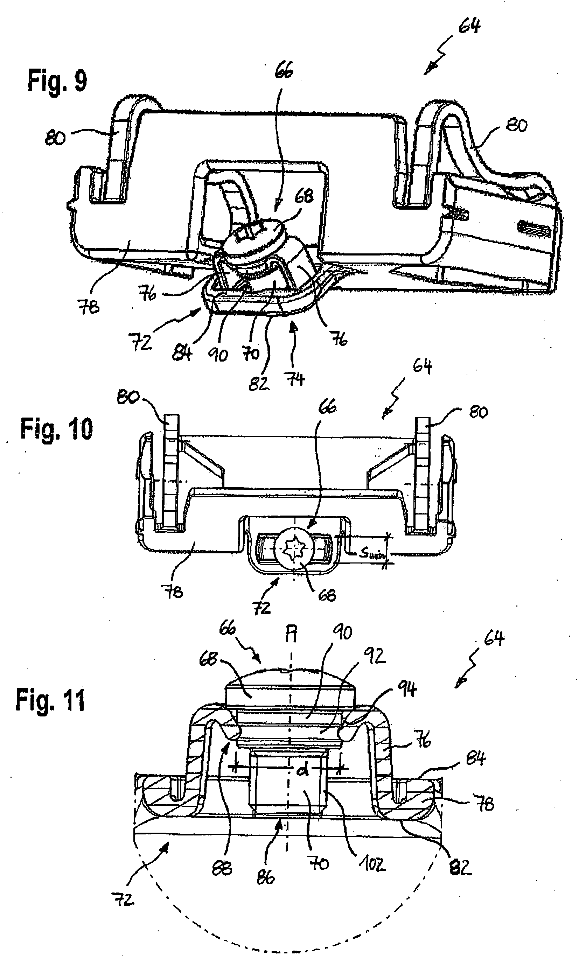

Während die Figuren 1 bis 8 den Endbeschlag 11 des Endbeschlagstraffers 10 mit einer herkömmlichen Andruckeinheit 64' zeigen, ist in den Figuren 9 bis 14 eine erfindungsgemäße Andruckeinheit 64 dargestellt, welche die herkömmliche Andruckeinheit 64' ersetzen kann, ohne dass der übrige Endbeschlag 11 konstruktiv verändert werden muss.

Die Figuren 9 bis 11 zeigen die Andruckeinheit 64 zur Beaufschlagung der Gurtwelle 12 des Endbeschlags 11, mit einer Schraube 66 zur Befestigung der Andruckeinheit 64 am Rahmen 18 des Endbeschlags 11, wobei die Schraube 66 einen Schraubenkopf 68 und einen Schraubenschaft 70 mit einer Schaftachse A aufweist. Die Andruckeinheit 64 umfasst entsprechend einen Befestigungsabschnitt 72 mit einer Schraubenöffnung 74 zum Durchstecken des Schraubenschafts 70, wobei zwischen der Schraubenöffnung 74 und dem Schraubenschaft 70 ein radiales Spiel vorgesehen ist, und wobei der Befestigungsabschnitt 72 schraubenkopfseitig Montagearme 76 zur axialen Fixierung der Schraube 66 in einer Vormontageposition gemäß Figur 9 aufweist.

Die Andruckeinheit 64 umfasst im dargestellten Ausführungsbeispiel einen Kunststoffkörper 78, der einstückig mit dem Befestigungsabschnitt 72 der Andruckeinheit 64 ausgebildet ist. Abgesehen vom Kunststoffkörper 78 umfasst die Andruckeinheit 64 außerdem zwei Federelemente 80 zur Beaufschlagung der Gurtwelle 12 des Sicherheitsgurtsystems in ihre Sperrstellung.

Insbesondere sind die beiden Federelemente 80 teilweise von einem Kunststoff des als Spritzgussteil ausgeführten Kunststoffkörpers 78 umspritzt, sodass sich die Andruckeinheit 64 einfach und preiswert herstellen sowie mit geringem Aufwand geometrisch an unterschiedliche Endbeschläge 11 anpassen lässt.

Gemäß Figur 11 weist der Befestigungsabschnitt 72 der Andruckeinheit 64 eine erste, rahmenseitige Kontaktfläche 82 und eine axial entgegengesetzte zweite, schraubenkopfseitige Kontaktfläche 84 auf, wobei das vom Schraubenkopf 68 abgewandte Ende 86 der Schraube 66 in der Vormontageposition axial zwischen einem freien Ende 88 der Montagearme 76 und der ersten Kontaktfläche 82 des Befestigungsabschnitts 72 angeordnet ist.

Außerdem wird anhand der Figur 11 deutlich, dass die Schraube 66 eine Bundschraube ist und in axialer Richtung zwischen dem Schraubenkopf 68 und dem Schraubenschaft 70 einen Schraubenbund 90 aufweist, wobei der Durchmesser d des Schraubenbunds 90 größer als der Durchmesser des Schraubenschafts 70 und kleiner als der Durchmesser des Schraubenkopfes 68 ist.

Ferner ist gemäß Figur 10 eine minimale Abmessung Sₘᵢₙ der Schraubenöffnung 74 senkrecht zur Schaftachse A größer als der Durchmesser d des Schraubenbunds 90 und kleiner als der Durchmesser des Schraubenkopfs 68. Ein Rand der Schraubenöffnung 74 bildet demzufolge einen Anschlag für den Schraubenkopf 68, wohingegen der Schraubenbund 90 in der Schraubenöffnung 74 aufgenommen werden kann.

In axialer Richtung ist die Dicke t des Befestigungsabschnitts 72 am Rand der Schraubenöffnung 74 geringfügig größer als die Länge I des Schraubenbunds 90. Folglich lässt sich die Andruckeinheit 64 unter Verformung des Kunststoffs des Befestigungsabschnitts 72 mit einer definierten Vorspannung am Rahmen 18 des Endbeschlags 11 befestigen.

Der Schraubanbund 90 weist gemäß Figur 11 eine in Umfangsrichtung umlaufende Nut 92 auf, wobei die Montagearme 76 der Andruckeinheit 64 In der dargestellten Vormontageposition der Schraube 66 in diese Nut 92 eingreifen. Die Montagearme 76 sind im vorliegenden Ausführungsbeispiel zwei einander gegenüberliegende, radial elastische Federarme, welche die Schraube 66 In Ihrer Vormontageposition radial einwärts beaufschlagen.

Die Montagearme 76 weisen im Übrigen dem Schraubenkopf 66 zugewandte Schrägflächen 94 auf, an denen der Schraubenkopf 68 bei einer axialen Beaufschlagung in Richtung zur rahmenseitigen Kontaktfläche 82 entlang gleiten kann.

In ihrer Vormontageposition gemäß den Figuren 9 bis 11 ist die Schraube 66 unvertierbar mit dem Befestigungsabschnitt 72 der Andruckeinheit 64 verbunden und bildet zusammen mit der Andruckeinheit 64 eine vormontierte Baugruppe, welche sich einfach und zuverlässig montieren lässt, beispielsweise an einem Endbeschlag 11 gemäß Figur 6.

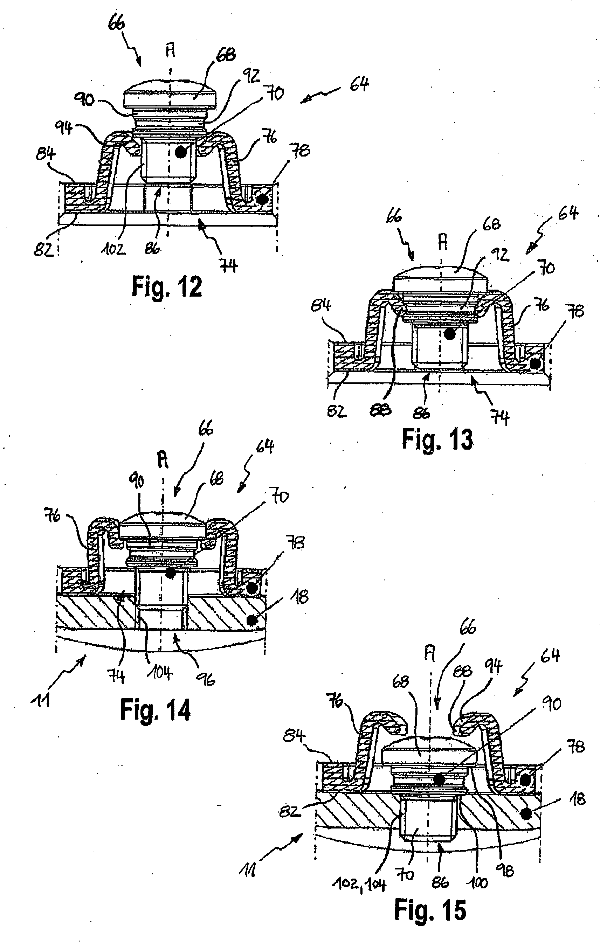

Der Endbeschlag 11 des Sicherheitsgurtsystems für Kraftfahrzeuge umfasst dann die Andruckeinheit 64 gemäß den Figuren 9 bis 11, den Rahmen 18 aus Metall, der eine Gewindeöffnung 96 zur Befestigung der Andruckeinheit 64 aufweist, und die Gurtwelle 12, die im Rahmen 18 um eine Gurtwellenachse drehbar gelagert ist, wobei sich die Schraube 66 in ihrer Endmontage- öder Befestigungsposition (vgl. Figur 15) bezogen auf die Schaftachse A mit radialem Spiel durch die Schraubenöffnung 74 der Andruckeinheit 64 erstreckt und in die Gewindeöffnung 96 des Rahmens 18 eingeschraubt ist.

Die Figuren 12 und 13 zeigen Detailschnitte der Andruckeinheit 64 im Bereich des Befestigungsabschnitts 72, wobei die Schraube 66 gemäß Figur 12 am Befestigungsabschnitt 72 vormontiert wird und sich gemäß Figur 13 in ihrer Vormontageposition befindet.

Die Figuren 14 und 15 zeigen Detailausschhitte des Endbeschlags 11 im Bereich des Befestigungsabschnitts 72, wobei die Andruckeinheit 64 gemäß Figur 14 mittels der Schraube 66 am Rahmen 18 des Endbeschlags montiert wird, und wobei sich die Schraube 66 gemäß Figur 15 in ihrer Endmontage- oder Befestigungsposition befindet.

Gemäß Figur 12 wird die Schraube 66 zunächst in die Schraubenöffnung 74 des Befestigungsabschnitts 72 eingedrückt, wobei die elastischen Montagearme 76 durch den Schraubenbund 90 radial nach außen verformt werden sowie bei Erreichen der Nut 92 des Schraubenbunds 90 radial nach Innen schnappen und in die Nut 92 eingreifen. In dieser Vormontageposition der Schraube 66 gemäß Figur 13 bildet die Andruckeinheit 64 mit der Schraube 66 eine vormontierte Baugruppe aus.

Die Andruckeinheit 64 wird dann als vormontierte Baugruppe gemäß Figur 13 ausgeliefert und im Folgenden am bereits karosserieseitig befestigten Rahmen 18 des Endbeschlags 11 montiert. Nach einer Positionierung der vormontierten Baugruppe relativ zum Rahmen 18 wird die Schraube 66 gemäß Figur 14 in die Gewindeöffnung 96 des Rahmens 18 weiter eingedrückt, bis ein Außengewinde 102 des Schraubenschafts 70 an einem Innengewinde 104 der Gewindeöffnung angreift. Hierbei werden die Montagearme 76 durch den Schraubenkopf 68 radial nach außen verformt. Schließlich wird die Schraube 66 in die Gewindeöffnung 96 des Rahmens 18 eingedreht, bis sie ihre Endmontage- oder Befestigungsposition gemäß Figur 15 erreicht, wobei die Montagearme 76 auf der dem Schraubenbund 90 abgewandten Seite des Schraubenkopfs 68 radial nach innen schnappen.

Der Schraubenkopf 68 weist bundseitig eine Anlagefläche 98 für den Befestigungsabschnitt 72 und der Schraubenbund 90 schaftseitig eine Anlagefläche 100 für den Rahmen 18 auf, wobei in der Befestigungsposition der Schraube 66 gemäß Figur 15 die Anlagefläche 98 des Schraubenkopfs 68 am Befestigungsabschnitt 72 und die Anlagefläche 100 des Schraubenbunds 90 am Rahmen 18 anliegen. Dies bedeutet mit anderen Worten, dass die Schraube 66 bis zu einem Metall/Metall-Kontakt zwischen der Anlagefläche 100 des Schraubenbunds 90 und dem Rahmen 18 eingedreht wird, wodurch sich dauerhaft eine definierte und zuverlässige Befestigung der Andruckeinheit 64 am Rahmen 18 des Endbeschlags 11 unter Vorspannung des Befestigungsabschnitts 72 ergibt. Die Befestigung ist dabei insbesondere unabhängig vom Kunststoff des Befestigungsabschnitts 72, dessen Langzeitverhalten in Bezug auf Kriechdehnung und Alterungseffekte kaum abschätzbar Ist.

Im vorliegenden Ausführungsbeispiel ist die Andruckeinheit 64 so ausgebildet, dass die Montagearme 76 bei einer Demontage der Andruckeinheit 64 vom Rahmen 18, das heißt beim Herausdrehen der Schraube 66, auf dem Schraubenkopf 68 radial nach außen gleiten. Dadurch lässt sich die Schraube 66 problemlos über die Position gemäß Figur 14 wieder in ihre Vormontageposition gemäß Figur 13 bewegen und ermöglicht eine Wiederverwendung der Andruckeinheit 64.

Sollte eine Wiederverwendung der Andruckeinheit 64 nicht gewünscht sein, zum Beispiel aus Sicherheitsgründen, können der Schraubenkopf 68 und/oder die Montagearme 76 so ausgebildet sein, dass eine zerstörungsfreie Demontage der Andruckeinheit 64 erschwert oder verhindert wird.

## Patentansprüche

1. Andruckeinheit zur Beaufschlagung einer Gurtwelle (12) in einem Sicherheitsgurtsystem, mit einer Schraube (66) zur Befestigung der Andruckeinheit (64) an einem Rahmen (18) des Sicherheitsgurtsystems,
wobei die Schraube (66) einen Schraubenkopf (68) und einen Schraubenschaft (70) aufweist,
wobei die Andruckeinheit (64) einen Befestigungsabschnitt (72) mit einer Schraubenöffnung (74) zum Durchstecken des Schraubenschafts (70) umfasst,
**dadurch gekennzeichnet, dass** zwischen der Schraubenöffnung (74) und dem Schraubenschaft (70) ein radiales Spiel vorgesehen ist, und der Befestigungsabschnitt (72) schraubenkopfseitig Montagearme (76) zur axialen Fixierung der Schraube (66) in einer Vormontageposition aufweist.

2. Andruckeinheit nach. Anspruch 1, **dadurch gekennzeichnet, dass** der Befestigungsabschnitt (72) eine erste, rahmenseitige Kontaktfläche (82) und eine axial entgegengesetzte zweite, schraubenkopfseitige Kontaktfläche (84) aufweist, wobei das vom Schraubenkopf (68) abgewandte Ende (86) der Schraube (66) in der Vormontageposition axial zwischen einem freien Ende (88) der Montagearme (76) und der ersten Kontaktfläche (82) des Befestigungsabschnitts (72) angeordnet ist.

3. Andruckeinheit nach Anspruch 1 oder 2, **dadurch gekennzeichnet, dass** die Schraube (66) eine Bundschraube ist und in axialer Richtung zwischen dem Schraubenkopf (68) und dem Schraubenschaft (70) einen Schraubenbund (90) aufweist, wobei ein Durchmesser (d) des Schraubenbunds (90) zwischen einem Durchmesser des Schraubenschafts (70) und einem Durchmesser des Schraubenkopfes (68) liegt.

4. Andruckeinheit nach Anspruch 3, **dadurch gekennzeichnet, dass** die minimale Abmessung (sₘᵢₙ) der Schraubenöffnung (74) senkrecht zu einer Schaftachse (A) der Schraube (66) größer als der Durchmesser (d) des Schraubenbunds (90) und kleiner als der Durchmesser des Schraubenkopfes (68) ist.

5. Andruckeinheit nach Anspruch 3 oder 4, **dadurch gekennzeichnet, dass** die Dicke (t) des Befestigungsabschnitts (72) geringfügig größer ist als die Länge (I) des Schraubenbunds (90).

6. Andruckeinheit nach einem der Ansprüche 3 bis 5, **dadurch gekennzeichnet, dass** der Schraubenbund (90) eine in Umfangsrichtung umlaufende Nut (92) aufweist, wobei die Montagearme (76) der Andruckeinheit (64) in der Vormontageposition der Schraube (66) in diese Nut (92) eingreifen.

7. Andruckeinheit nach einem der vorhergehenden Ansprüche, **dadurch gekennzeichnet, dass** die Montagearme (76) radial elastische Federarme sind.

8. Andruckeinheit nach Anspruch 7, **dadurch gekennzeichnet, dass** die Montagearme (76) dem Schraubenkopf (68) zugewandte Schrägflächen (94) aufweisen, an denen der Schraubenkopf (68) bei einer axialen Beaufschlagung in Richtung zur ersten, rahmenseitigen Kontaktfläche (82) entlang gleiten kann.

9. Andruckeinheit nach einem der vorhergehenden Ansprüche, **dadurch gekennzeichnet, dass** die Andruckeinheit (64) einen Kunststoffkörper (78) umfasst, der einstückig mit dem Befestigungsabschnitt (72) ausgebildet ist.

10. Andruckeinheit nach einem der vorhergehenden Ansprüche, **dadurch gekennzeichnet, dass** die Andruckeinheit (64) wenigstens ein Federelement (80) zur Beaufschlagung der Gurtwelle (12) des Sicherheitsgurtsystems umfasst.

11. Andruckeinheit nach Anspruch 9 und 10, **dadurch gekennzeichnet, dass** das wenigstens eine Federelement (80) teilweise von einem Kunststoff des als Spritzgussteil ausgeführten Kunststoffkörpers (78) umspritzt ist

12. Endbeschlag eines Sicherheitsgurtsystems für Kraftfahrzeuge, mit
einer Andruckeinheit (64) nach einem der vorhergehenden Ansprüche,
einem Rahmen (18) aus Metall, der eine Gewindeöffnung (96) zur Befestigung der Andruckeinheit (64) am Rahmen (18) aufweist, und
einer Gurtwelle (12), die In dem Rahmen (18) um eine Gurtwellenachse drehbar gelagert ist,
wobei sich die Schraube (66) in einer Befestigungsposition mit radialem Spiel durch die Schraubenöffnung (74) der Andruckeinheit (64) erstreckt und in die Gewindeöffnung (96) des Rahmens (18) eingeschraubt ist.

13. Endbeschlag nach Anspruch 12, **dadurch gekennzeichnet, dass** die Schraube (66) eine Bundschraube ist und in axialer Richtung zwischen dem Schraubenkopf (68) und dem Schraubenschaft (70) einen Schraubenbund (90) aufweist, wobei ein Durchmesser (d) des Schraubenbunds (90) zwischen einem Durchmesser des Schraubenschafts (70) und einem Durchmesser des Schraubenkopfes (68) liegt, wobei der Schraubenkopf (68) bundseitig eine Anlagefläche (98) für den Befestigungsabschnitt (72) und der Schraubenbund (90) schaftseitig eine Anlagefläche (100) für den Rahmen (18) aufweist.

14. Endbeschlag nach Anspruch 13, **dadurch gekennzeichnet, dass** die Dicke (t) des Befestigungsabschnitts (72) geringfügig größer ist als die Länge (I) des Schraubenbunds (90), wobei in der Befestigungsposition der Schraube (66) die Anlagefläche (98) des Schraubenkopfes (68) am Befestigungsabschnitt (72) und die Anlagefläche (100) des Schraubenbundes (90) am Rahmen (18) anliegt.

## Claims

1. A pressure unit for pressurizing a belt shaft (12) in a seat belt system comprising a screw (66) for fastening the pressure unit (64) to a frame (18) of the seat belt system,
wherein the screw (66) includes a screw head (68) and a screw shank (70),
wherein the pressure unit (64) comprises a fastening portion (72) having a screw aperture (74) for passing the shank (70) therethrough,
**characterized in that** radial play is provided between the screw aperture (74) and the screw shank (70) and, on the screw head side, the fastening portion (72) includes mounting arms (76) for axially fixing the screw (66) in a pre-assembly position.

2. The pressure unit according to claim 1, **characterized in that** the fastening portion (72) includes a first frame-side contact surface (82) and an axially opposed second contact surface (84) on the screw head side, wherein the end (86) of the screw (66) facing away from the screw head (68) in the pre-assembly position is axially arranged between a free end (88) of the mounting arms (76) and the first contact surface (82) of the fastening portion (72).

3. The pressure unit according to claim 1 or 2, **characterized in that** the screw (66) is a collar screw and in the axial direction between the screw head (68) and the screw shank (70) includes a screw collar (90), wherein a diameter (d) of the screw collar (90) ranges between a diameter of the screw shank (70) and a diameter of the screw head (68).

4. The pressure unit according to claim 3, **characterized in that** the minimum dimension (Sₘᵢₙ) of the screw aperture (74) normal to a shank axis (A) of the screw (66) is larger than the diameter (d) of the screw collar (90) and smaller than the diameter of the screw head (68).

5. The pressure unit according to claim 3 or 4, **characterized in that** the thickness (t) of the fastening portion (72) is slightly larger than the length (I) of the screw collar (90).

6. The pressure unit according to any one of the claims 3 to 5, **characterized in that** the screw collar (90) includes a groove (92) peripheral in the circumferential direction, wherein the mounting arms (76) of the pressure unit (64) engage in said groove (92) in the pre-assembly position of the screw (66).

7. The pressure unit according to any one of the preceding claims, **characterized in that** the mounting arms (76) are radially elastic spring arms.

8. The pressure unit according to claim 7, **characterized in that** the mounting arms (76) have inclined surfaces (94) facing the screw head (68) along which the screw head (68) is adapted to slide, in the case of axial pressurization, in the direction of the first frame-side contact surface (82).

9. The pressure unit according to any one of the preceding claims, **characterized in that** the pressure unit (64) comprises a plastic body (78) which is formed integrally with the fastening portion (72).

10. The pressure unit according to any one of the preceding claims, **characterized in that** the pressure unit (64) comprises at least one spring element (80) for pressurizing the belt shaft (12) of the seat belt system.

11. The pressure unit according to claims 9 and 10, **characterized in that** plastic material of the plastic body (78) configured as an injection-molded part is partly injected around the at least one spring element (80).

12. An end fitting of a seat belt system for vehicles comprising
a pressure unit (84) according to any one of the preceding claims,
a frame (18) made of metal having a thread aperture (96) for fastening the pressure unit (64) to the frame (18), and
a belt shaft (12) which is rotatably supported within the frame (18) about a belt shaft axis,
wherein the screw (66) extends in a fastening position with radial play through the screw aperture (74) of the pressure unit (64) and is screwed into the thread aperture (96) of the frame (18).

13. The end fitting according to claim 12, **characterized in that** the screw (66) is a collar screw and in the axial direction between the screw head (68) and the screw shank (70) includes a screw collar (90), wherein a diameter (d) of the screw collar (90) ranges between a diameter of the shank (70) and a diameter of the screw head (68), wherein at the collar side the screw head (68) includes a contact surface (98) for the fastening portion (72) and on the shank side the screw collar (90) includes a contact surface (100) for the frame (18).

14. The end fitting according to claim 13, **characterized in that** the thickness (t) of the fastening portion (72) is slightly larger than the length (I) of the screw collar (90), wherein, in the fastening position of the screw (66), the contact surface (98) of the screw head (68) abuts against the fastening portion (72) and the contact surface (100) of the screw collar (90) abuts against the frame (18).

## Revendications

1. Dispositif exerçant une pression agissant sur un enrouleur de ceinture (12) dans un système de ceinture de sécurité, avec une vis (66) pour fixer le dispositif exerçant une pression (64) à un châssis (18) du système de ceinture de sécurité,
pour lequel la vis (66) présente une tête de vis (68) et une tige filetée (70),
pour lequel le dispositif exerçant une pression (64) comprend une partie de montage (72) ayant une ouverture filetée (74) pour le passage de la tige filetée (70),
**caractérisé en ce que**, entre l'ouverture de vis (74) et la tige filetée (70), un jeu radial est prévu, et que la partie de fixation (72) située côté tête de vis du bras de fixation (76) possède une position de pré-montage pour la fixation axiale de la vis (66).

2. Dispositif exerçant une pression selon la revendication 1, **caractérisé en ce que** la partie de fixation (72) possède une première surface de contact (82) située côté châssis et, opposée axialement, une seconde surface de contact (84) située côté tête de vis, pour lequel l'extrémité opposée (86) à la tête de vis (68) de la vis (66) est disposée en position de pré-montage axialement entre une extrémité libre (88) du bras de montage (76) et la première surface de contact (82) de la partie de fixation (72).

3. Dispositif exerçant une pression selon la revendication 1 ou 2, **caractérisé en ce que** la vis (66) est une vis à collerette, et présente un collet de vis (90) disposé axialement entre la tête de vis (68) et la tige filetée (70), pour lequel un diamètre (d) du collet de vis (90) est compris entre le diamètre de la tige filetée (70) et un diamètre de la tête de vis (68).

4. Dispositif exerçant une pression selon la revendication 3, **caractérisé en ce que** la dimension minimale (Sₘᵢₙ) de l'ouverture de vis (74) perpendiculaire à un axe de tige (A) de la vis (66) est supérieure au diamètre (d) du collet de vis (90) et inférieure au diamètre de la tête de vis (68).

5. Dispositif exerçant une pression selon la revendication 3 ou 4, **caractérisé en ce que** l'épaisseur (t) de la partie de fixation (72) est légèrement supérieure à la longueur (1) du collet de vis (90).

6. Dispositif exerçant une pression selon l'une des revendications 3 à 5, **caractérisé en ce que** le collet de vis (90) présente une rainure circonférentielle périphérique (92), pour lequel le bras de montage (76) du dispositif exerçant une pression (64) engage en position de préassemblage la vis (66) dans cette rainure (92).

7. Dispositif exerçant une pression selon l'une des revendications précédentes, **caractérisé en ce que** les bras de fixation (76) sont des bras de ressort élastiques radiaux.

8. Dispositif exerçant une pression selon la revendication 7, **caractérisé en ce que** les bras de montage (76) possèdent des surfaces inclinées (94) opposées à la tête de vis (68), sur lesquelles la tête de vis (68) peut coulisser longitudinalement par une action axiale en direction de la première surface de contact (82) côté châssis.

9. Dispositif exerçant une pression selon l'une quelconque des revendications précédentes, **caractérisé en ce que** le dispositif exerçant une pression (64) comprend un corps en matière plastique (78) qui est formé d'un seul tenant avec la partie de fixation (72).

10. Dispositif exerçant une pression selon l'une des revendications précédentes, **caractérisé en ce que** le dispositif exerçant une pression (04) comprend au moins un élément ressort (80) pour agir sur l'arbre de ceinture (12) du système de ceinture de sécurité.

11. Dispositif exerçant une pression selon la revendication 9 et 10, **caractérisé en ce qu'**au moins un élément ressort (80) est surmoulé partiellement de plastique issu de la partie moulée par injection du corps en matière plastique (78).

12. Système de fixation d'un système de ceinture de sécurité pour véhicules automobiles, comportant un dispositif exerçant une pression (64) selon l'une quelconque des revendications précédentes,
un châssis (18) en métal, ayant une ouverture filetée (96) pour fixer le dispositif exerçant une pression (64) sur le châssis (18), et
un enrouleur de ceinture (12), qui est monté libre dans le châssis (18) autour d'un axe d'enrouleur de ceinture,
dans lequel la vis (66) en position de montage s'étend à travers l'ouverture de vis (74) du dispositif exerçant une pression (64) avec un jeu radial et est vissée dans l'ouverture filetée (96) du cadre (18).

13. Système de fixation selon la revendication 12, **caractérisé en ce que** la vis (66) est une vis à collerette, et possède un collet de vis (90) disposé axialement entre la tête de vis (68) et la tige filetée (70), pour lequel un diamètre (d) du collet de vis (90) se situe entre un diamètre de la tige de vis (70) et un diamètre de la tête de vis (68), pour lequel la tête de vis (68) côté collet présente une surface de contact (98) pour la partie de montage (72) et le collet de vis (90) présente du côté de la tige une surface d'appui (100) pour le châssis (18).

14. Système de fixation selon la revendication 13, **caractérisé en ce que** l'épaisseur (t) de la partie de fixation (72) est légèrement supérieure à la longueur (1) du collet de vis (90), pour lequel, dans la position de fixation de la vis (66), la surface d'appui (98) de la tête de vis (68) repose sur la partie de fixation (72) et la surface de contact (100) du collet de vis (90) repose sur le cadre (18).
